# EUROPEAN PATENT SPECIFICATION

(11) **EP 1 154 394 B1**
(45) Date of publication and mention of the grant of the patent: **22.09.2004**
(21) Application number: 01304162.9
(22) Date of filing: 09.05.2001
(51) Int. Cl.: G09F 7/00, G09F 17/00, G09F 21/04

(54) **Warning signs**
Warnschilder
Panneaux d'avertissement

(30) Priority: 09.05.2000 GB 0011194
(43) Date of publication of application: 14.11.2001
(73) Proprietor: Sheppard, Alan Gilbert, Eastville, Bristol BS5 6YF (GB)
(72) Inventor: Sheppard, Alan Gilbert, Eastville, Bristol BS5 6YF (GB)
(74) Representative: Harrison, Ivor Stanley

(56) References cited:
- GB-A- 2 260 214
- US-A- 2 354 018
- US-A- 4 016 665
- US-A- 5 893 226

## Description

This invention relates to warning signs and in particular it relates to a versatile and portable warning sign device.

In many situations, including but not limited to hazardous situations and emergencies, it is often of paramount importance that people in the vicinity of the situation are forewarned of its existence. Audible and visual alarms can be employed, but these only work over short distances and require direct power sources. Other visible signs are generally of huge dimensions and require built-in supporting means. Such large visible signs are not readily portable, they are very inconvenient to store when not in use and do not typically allow rapid and versatile erection in emergency situations.

Therefore it is an object of the present invention to provide a warning sign device which is capable of conveying warning signs over long distances without the direct use of electrical power and which can be manipulated to allow portability, convenient storage and ready attachment to a wide range of objects.

According to one aspect of the present invention there is provided a warning sign device comprising at least one sheet of flexible display material and means for retaining the said sheet of material unfolded in use, the display surface of the material being constituted by a background material of one or more colours having arranged within one or more zones of material shaped so as to form indicia, at least one of the background or zone materials being of high light reflectance.

According to the invention, the display surface of the display material comprises a first sheet of background material onto which is attached separate zones of material to form the indicia.

Preferably, the sheets and zones of material are formed from high strength synthetic materials, such as a high denier nylon. Even more preferably, the display materials are formed from high strength materials which are impregnated with hydrophobic materials, such as resins, so as to render the display materials essentially waterproof. When using either impregnated or non-impregnated high strength materials to form the display materials it may be desirable to laminate the display materials with layers of clear flexible material, such as PVC, to enhance the durability and wear-resistance of the device.

Document GB-A-2 260 214 describes a high contrast sign with a permanent message which can be fixed to a vehicle with suction pads. US-A-5 893 226 describes a sign with attachable elements which uses rigid support members to stretch the sign while in place.

The means for retaining the display material unfolded in use may be constituted by rings of stiff material, such as a metal or a plastics material, or simply by holes in the display material whose edges are sewn, through which lengths of a rope-like or resilient plastics or rubber material can be threaded in use. Alternatively, the retaining means can be magnetic strips (for attachment to a ferrous object) or one of a pair of 'hook and loop' type fastening elements (for attachment to the corresponding member of the pair as pre-attached to an object). Many other retaining/attachment means could be used as part of the device according to this invention, as will be realised by one skilled in the art.

Preferably the device of the present invention is adapted to make it substantially weatherproof. This would have the advantage of making the device durable when used outdoors and could also provide a useful shelter and identification system for those finding themselves in many types of emergency situations.

The warning sign device is preferably of appropriate material and dimensions such that, on folding, it can easily be carried around by a person or, for example, in the boot of a car.

The invention provides a kit of parts for a portable warning sign device as defined in claim 1.

Thus, the device of the present invention is able to convey warning signals over long distances without the direct use of electrical power. The device is portable and extremely versatile and can be used in a wide range of situations. Advantageously, the device relies on the differential reflectivity of its components to convey warnings and is particularly advantageous in that it does not rely on a cumbersome built-in means of support, being instead attachable to and supportable by a variety of different objects.

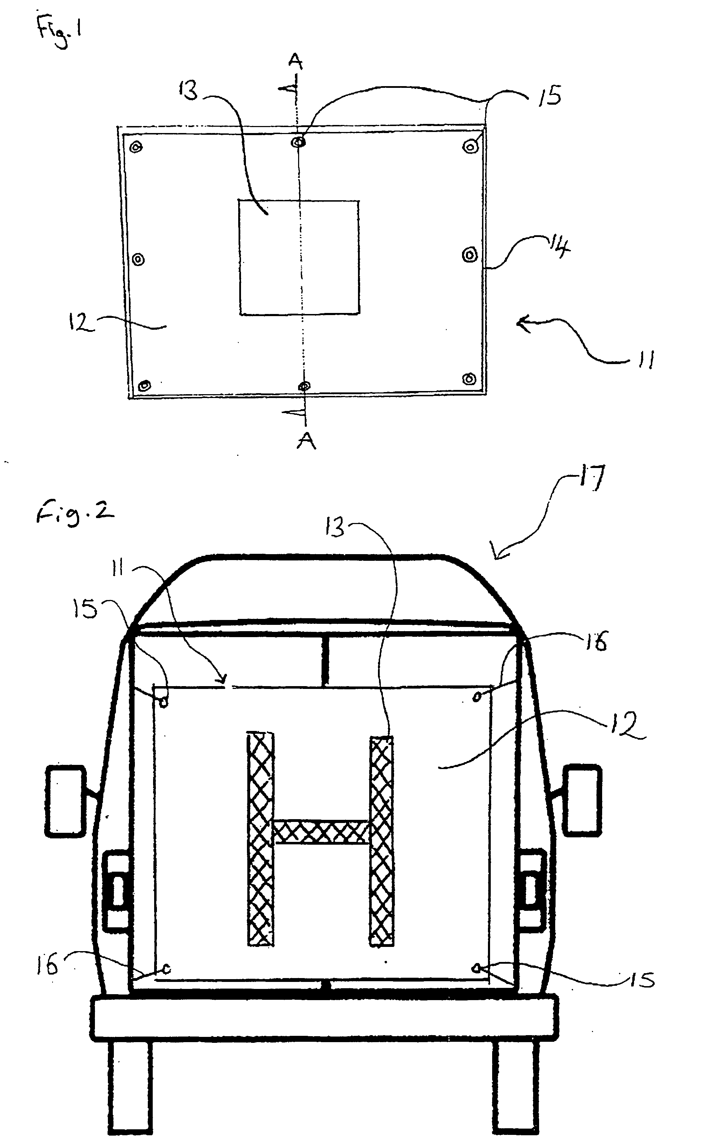

Embodiments of the present invention will now be described in detail by way of example only and with reference to the appended drawings, of which:-
Figure 1 is a side elevation of a warning sign device according to the present invention;
Figure 2 shows a warning device according to the present invention arranged for use by attachment to the rear of a vehicle.

The device comprises a sheet of flexible display material indicated 11 which consists of a background sheet 12 onto which is attached a further zone of material 13 which forms the indicium of the device. At least one of the sheets 12, 13 is formed from a highly light reflective material. The attachment of the material 13 to the sheet 12 may be permanent for example by means of a suitable adhesive, or temporary, for example by making the material 13 peelable from the sheet 12.

At the edges of the device are the retention means 15 which, in the particular embodiment shown, consist of rings of hard plastics material which are capable of accommodating threading means in use.

In Figure 2, the invention is shown in use. The device indicated 11 is attached via its retention means 15 and using threading means 17 to the rear of a road vehicle, generally indicated 16. The contrast between the background sheet 12 and the indicium 13 in terms of light reflectance (or, conceivably, fluorescence under appropriate circumstances) means that the warning sign device 11 is highly visible by other parties over long distances. To remove the device 11 from the vehicle 17, the threading means 16 are simply detached from either the vehicle 17 or the retention means 15, or both, and the device 11 is then rolled or folded for easy storage.

## Claims

1. A kit of parts for a portable warning sign device, the parts comprising at least one sheet of flexible display material and means for maintaining the sheet unfolded in use and a plurality of different warning sign elements for attaching to said sheet material when unfolded, whereby a selected element may be attached to said sheet material to constitute a desired warning sign, at least one of the display material and warning sign elements being of high light reflectance, **characterised in that** the means for maintaining the display material unfolded in use comprises rings or eyelets of stiff material or holes in the display material whose edges are sewn, through which lengths of a rope-like or resilient plastics or rubber material can be threaded in use, or comprises magnetic strips or one of a pair of 'hook and loop' type fastening elements.

2. A kit according to claim 1 in which the sheet material and warning sign elements are formed from high strength synthetic materials.

3. A kit according to claim 2 in which the high strength materials are impregnated with hydrophobic materials.

4. A kit according to any preceding claim in which the sheet material and warning sign elements are laminated with layers of clear flexible material.

5. A kit according to any preceding claim, in which the sheet material and warning sign elements have different reflectivity to light.

6. A kit according to any preceding claim, in which the sheet material and warning sign elements are weatherproof.

## Patentansprüche

1. Satz von Teilen für eine tragbare Warnzeichenvorrichtung, wobei die Teile wenigstens einen Bogen eines flexiblen Anzeigematerials und eine Einrichtung, um den Bogen bei Gebrauch aufgefaltet zu halten, sowie mehrere unterschiedliche Warnzeichenelemente zum Anbringen an das Bogenmaterial, wenn es aufgefaltet ist, aufweisen, wobei ein ausgewähltes Element an dem Bogenmaterial angebracht werden kann, um ein gewünschtes Warnzeichen zu bilden, wobei das Anzeigematerial und/oder die Warnzeichenelemente ein hohes Lichtreflexionsvermögen besitzen,
**dadurch gekennzeichnet,**
**dass** die Einrichtung, um das Anzeigematerial bei Gebrauch aufgefaltet zu halten, Ringe oder Ösen eines steifen Materials oder Löcher in dem Anzeigematerial, deren Kanten vernäht sind, durch welche Längen eines seilartigen oder elastischen Kunststoff- oder Gummimaterials bei Gebrauch gefädelt sein können, aufweist oder magnetische Streifen oder ein Paar von klettverschlussartigen Befestigungselementen aufweist.

2. Satz nach Anspruch 1, bei welchem das Bogenmaterial und die Warnzeichenelemente aus hochfesten synthetischen Materialien gebildet sind.

3. Satz nach Anspruch 2, bei welchem die hochfesten Materialien mit wasserabweisenden Materialien imprägniert sind.

4. Satz nach einem der vorhergehenden Ansprüche, bei welchem das Bogenmaterial und die Warnzeichenelemente mit Schichten eines klaren flexiblen Materials beschichtet sind.

5. Satz nach einem der vorhergehenden Ansprüche, bei welchem das Bogenmaterial und die Warnzeichenelemente eine unterschiedliche Reflektivität bezüglich Licht aufweisen.

6. Satz nach einem der vorhergehenden Ansprüche, bei welchem das Bogenmaterial und die Warnzeichenelemente wetterbeständig sind.

## Revendications

1. Ensemble de pièces pour un dispositif de signalisation du danger portatif, les pièces comprenant une feuille de matériau d'affichage flexible et des moyens pour maintenir la feuille dépliée en cas d'utilisation ainsi qu'une pluralité de différents éléments de signalisation du danger pour les attacher audit matériau en feuille lorsqu'il est déplié, sachant qu'un élément sélectionné peut être attaché audit matériau en feuille pour constituer un signal d'avertissement désiré, au moins un des matériaux d'affichage et des éléments de signalisation du danger étant hautement réfléchissant, **caractérisé en ce que** les moyens pour maintenir le matériau d'affichage déplié en cas d'utilisation comprennent des anneaux ou des oeillets de matériau rigide ou des trous dans le matériau d'affichage donc les coins sont cousus, à travers lesquels des longueurs de matériau en plastique ou en caoutchouc élastiques ou en forme de corde peuvent être enfilées en cas d'utilisation, ou comprend des bandes magnétiques ou un élément ou une paire d'éléments de fixation de type « velcro ».

2. Ensemble selon la revendication 1, dans lequel le matériau en feuille et les éléments de signalisation du danger sont formés à partir de matériaux synthétiques ultra résistants.

3. Ensemble selon la revendication 2, dans lequel les matériaux ultra résistants sont imprégnés de matériaux hydrophobes.

4. Ensemble selon l'une quelconque des revendications précédentes, dans lequel le matériau en feuille et les éléments de signalisation du danger sont laminés avec des couches de matériau flexible clair.

5. Ensemble selon l'une quelconque des revendications précédentes, dans lequel le matériau en feuille et les éléments de signalisation du danger ont un pouvoir réfléchissant différent à la lumière.

6. Ensemble selon l'une quelconque des revendications précédentes, dans lequel le matériau en feuille et les éléments de signalisation du danger sont étanches à l'eau.
